# EUROPEAN PATENT APPLICATION

(11) **EP 2 863 247 A1**
(43) Date of publication of application: **22.04.2015**
(21) Application number: 14189194.5
(22) Date of filing: 16.10.2014
(51) Int. Cl.: G02B 6/02, G02B 6/26, G01K 11/32

(54) **Dual-ended optical fiber pathway**

(30) Priority: 17.10.2013 US 201361891948 P; 31.03.2014 US 201414231000
(71) Applicant: OFS Fitel, LLC (a Delaware Limited Liability Company), Norcross 30071 (US)
(72) Inventor: Hines, Michael J., Ivoryton, CT 06643 (US); Li, Jie, Unionville, CT 06643 (US); Sun, Xiaoguang, West Hartford, CT 06117 (US); Hokansson, Adam, Granby, CT 06035 (US); Blakely, Robert J., Bristol, CT 06010 (US); Mattern, Robert Jr., Enfield, CT 06082 (US)
(74) Representative: Zimmermann, Tankred Klaus

(57) **Abstract**

In an optical fiber turnaround (10), first and second optical fiber cores (21, 22) are configured to transmit light bidirectionally along a transmission axis between proximal and distal ends of the first and second optical fiber cores. A reflector component (30) is positioned at the distal ends of the first and second optical fiber cores. The first core (21), second core (22), and reflector component (30) are configured to provide a bidirectional routing path, wherein light energy travels from the proximal end of one of the first and second cores (21, 22) towards the reflector component (30), and travels back from the reflector component (30) along the other of the first and second cores (21, 22).

## Description

### CROSS REFERENCE TO RELATED APPLICATIONS

The present application claims the priority benefit of United States Provisional Patent Application Serial No. 61/891,948, filed on October 17, 2013, which is owned by the assignee of the present application, and which is incorporated herein by reference in its entirety.

### BACKGROUND OF THE INVENTION

### Field of the Invention

The present invention relates generally to the field of fiber optics, and in particular to an optical fiber turnaround reflector for use in fiber-based sensors and like devices.

### Background Art

Distributed Temperature Sensors (DTS) are optical fiber sensing devices that utilize both single-ended and dual-ended optical fibers as sensors in order to precisely detect and measure temperature, acoustics or strain at selected locations along the length of a well bore or other application in which temperature, acoustics or strain detection over long distances is desired. Dual-ended interrogation (i.e., the ability to launch optical signals into both ends of an optical fiber pathway and to detect the resulting optical signals after transmission) is often preferred for a number of reasons, including improved accuracy, and in order to help compensate for measurement error resulting from exposure and time-dependent hydrogen diffusion and errors associated with splicing and connectors, in the sensor fibers.

Traditionally, in well bore temperature sensing applications, the sensing element is implemented by installing two independent optical transmission fibers within a small-diameter stainless steel tube (typically ∼ ¼ inch) that is deployed within an active well bore. The two independent fibers provide respective optical paths that are connected to each other at the distal end of the sensor by means of a turnaround device that contains an optical fiber that provides a continuous optical path between each of the distal ends of the two transmission fibers. The two optical fibers and the turnaround device provide a single optical path that can be stimulated with light from either of the two input fibers and interrogated.

Prior-art turnaround devices are typically large, cumbersome, and fragile. The minimum diameter achievable for prior-art turnarounds is constrained by the optical and mechanical properties of the turnaround fiber. Such properties include, for example, bending loss as well as the minimum bend radius limited in order to prolong the mechanical life of the turnaround.

Thus, the installation of these devices into a well bore can be problematic and catastrophic. In addition, the diameter of conventional turnaround devices places severe installation constraints on well bore operators and represents an impediment to advancing technologies for well bore sensing systems.

### SUMMARY OF INVENTION

In an optical fiber turnaround according to the invention, first and second optical fiber cores are configured to transmit light bidirectionally along a transmission axis between proximal and distal ends of the first and second optical fiber cores. A reflector component is positioned at the distal ends of the first and second optical fiber cores. The first core, second core, and reflector component are configured to provide a bidirectional routing path, wherein light energy travels from the proximal end of one of the first and second cores towards the reflector component, and travels back from the reflector component along the other of the first and second cores. It should be noted that two cores (first core, second core) are used in explanation of this approach but that further embodiments of the invention may invoke multiples of two cores, spatially arranged within the optical fiber to coincide with the reflector component and resulting in multiple, bidirectional pathways for transmission of light, thus enabling more than a single bidirectional pathway for transmission of light into, and out of the system.

In one practice of the invention, the reflector component is implemented as a chisel-shaped end of a multicore fiber segment, to which a reflective coating is applied. Alternatively, the reflector component can be formed at the end of a multicore body that is created by fusing together two or more optical fibers.

In a further practice of the invention, the reflector component is implemented by providing a reflective surface at the distal end of a graduated-index (GRIN) fiber segment with a quadratic refractive index profile. The GRIN fiber segment is configured to have a length equal to the fiber's quarter-pitch, such that light exiting the distal end of one of the first and second cores travels a half-pitch and is focused into the distal end of the other of the first and second cores.

### BRIEF DESCRIPTION OF THE DRAWINGS

FIGS. 1-4 show a series of views of an optical fiber turnaround according to a first practice of the invention. FIGS. 1 shows a perspective view, and FIGS. 2-4 show respectively a front view, a side view, and an exploded side view.
FIG. 5 shows a front view of an optical fiber turnaround according to a further aspect of the invention, comprising four fiber cores that are configured to provide two separate bidirectional pathways.
FIG. 6 shows a four-core turnaround, in which the cores are paired diagonally.
FIG. 7 shows a diagram of a turnaround device according to a further practice of the invention, in which first and second optical fiber cores are provided by first and second single-core fibers.
FIGS. 8A-8C are a series of diagrams illustrating the construction of the turnaround device shown in FIG. 7.
FIGS. 9 and 10 show, respectively, a side view and an exploded side view of a turnaround device according to a further aspect of the invention, comprising an MCF segment and a reflector element that is implemented using a segment of a graded-index (GRIN) fiber having a quadratic refractive index profile.

### DETAILED DESCRIPTION

The present invention is directed to a dual-ended optical fiber pathway for use in an optical fiber sensor, or other application. Aspects of the invention provide for the construction of dual-ended optical fiber pathways with rugged, miniaturized turnarounds that overcome the dimensional and structural limitations of the prior art.

In one practice of the invention, a multicore sensor fiber is provided with a chisel-shaped reflector at its distal end. In a further practice of the invention, a multicore fiber is provided with a fused reflector. The role of the reflector is to minimize the cross section of the entire sensor while providing an efficient, bidirectional routing path for light energy from one core to another core at the distal end of the sensor fiber. Providing a single fiber with multiple cores and a turnaround reflector with a small cross section (e.g., ∼250 µm compared to ∼2.2 mm for prior art turnaround devices) reduces sensor package size significantly while completely eliminating the need to accommodate fiber bend radius at the distal end of the sensor.

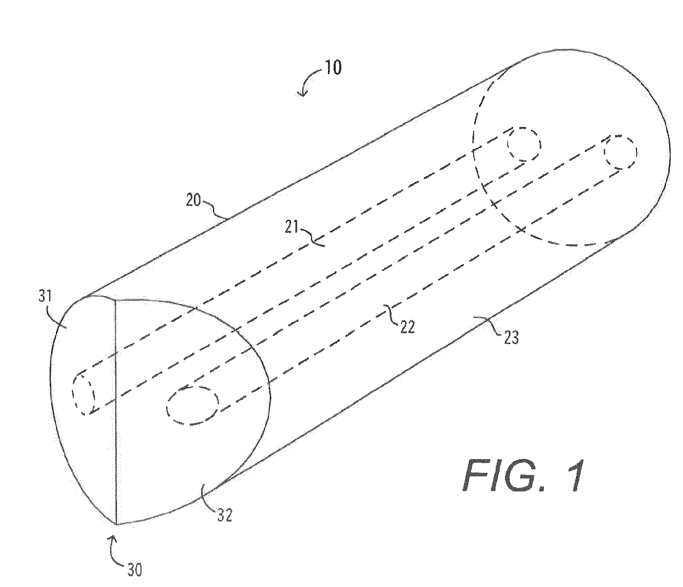

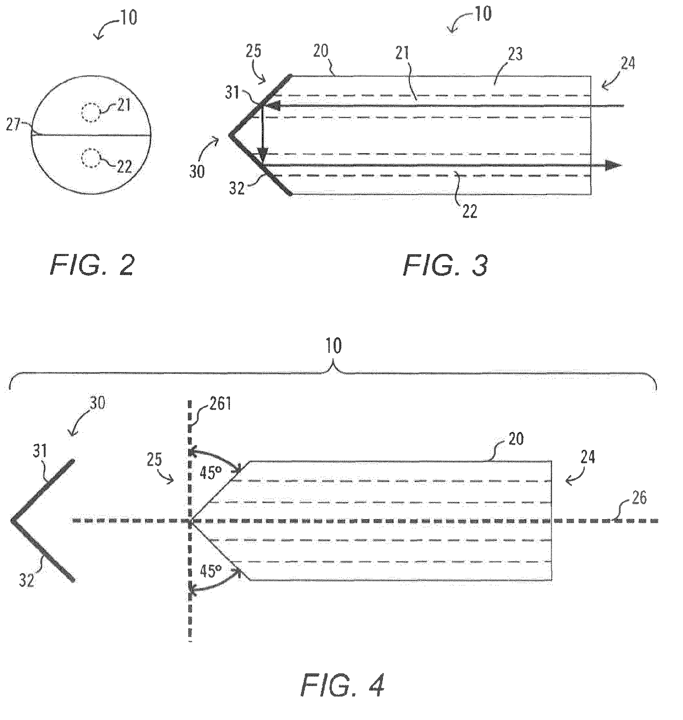

FIGS. 1-4 show a series of views of an optical fiber turnaround 10 according to a first practice of the invention. FIGS. 1 shows a perspective view, and FIGS. 2-4 show respectively a front view, a side view, and an exploded side view.

Turnaround 10 is formed from a segment of a two-core multicore fiber (MCF) 20 having a first core 21 and a second core 22 extending through a common cladding 23. The respective refractive indices of cores 21 and 22 and cladding 23 are configured to provide first and second waveguides for the transmission of light down the length of MCF segment 20 between its proximal end 24 and its distal end 25.

MCF 20 is fabricated using techniques known in the art. For example, the construction of a 7-core MCF is described in U.S. Pat. App. Serial No. 13/045,064, which is owned by the assignee of the present application and which is incorporated herein by reference in its entirety. The MCF described therein is produced from a set of core rods using a stack-and-draw process. The finished MCF has an outer cladding diameter of ∼125 µm. When coated with an acrylate dual coating layer, the MCF has an outer diameter of ∼250 µm. These diameters are comparable with those of single-core fibers.

Returning to FIGS. 1-4, in pathway 10 the turnaround function is provided by a miniature chisel-shaped reflector 30, that comprises a first reflective surface 31 positioned at the distal end of the first MCF core 21 and a second reflective surface 32 positioned at the distal end of the second MCF core 22. Reflective surfaces 31 and 32 are positioned and angled with respect to the first and second MCF cores 21 and 22 to create a bidirectional reflective pathway between the cores' distal ends.

In the practice of the invention depicted in FIGS. 1-4, the reflective surfaces 31 and 32 are angled at ±45° relative to plane 261 (FIG. 4), perpendicular to the fiber axis 26 (i.e., to the direction of incident light transmission), and are angled at 90° relative to each other. First and second cores 21 and 22, and reflective surfaces 31 and 32, are configured to have symmetrical positions around fiber diameter 27. It is noted that other angling schemes and core configurations may also be employed.

Reflector 30 may be constructed in a number of ways known in the art. For example, a reflector can be formed by grinding and polishing the distal end of a selected MCF segment to provide suitable angled surfaces 28 and 29 (FIG. 4). Once the angled surfaces 28 and 29 have been created, they are then coated with a suitably reflective material using known techniques.

In turnaround 10, light is launched into the proximal end of MCF segment 20. Light traveling along first MCF core 21 is transmitted to the distal end of MCF 21, where it is reflected by reflective surface 31 and reflective surface 32 into the distal end of the second core 22. The reflected light is then guided back to the proximal end of the second core 22 where it is available for detection. Light launched into the proximal end of MCF 20 can also travel along second core 22 travels in the reverse direction along the same pathway. The reflected light is then available for detection at the proximal end of the first MCF core 21.

Reflector 30 is formed at the end of MCF segment 20. Thus, its outer diameter is that of the MCF segment, i.e., ∼250 µm, coated. Thus, the present invention overcomes the dimensional limitations of prior art turnaround devices, which typically have a diameter on the order of ∼2.2 mm.

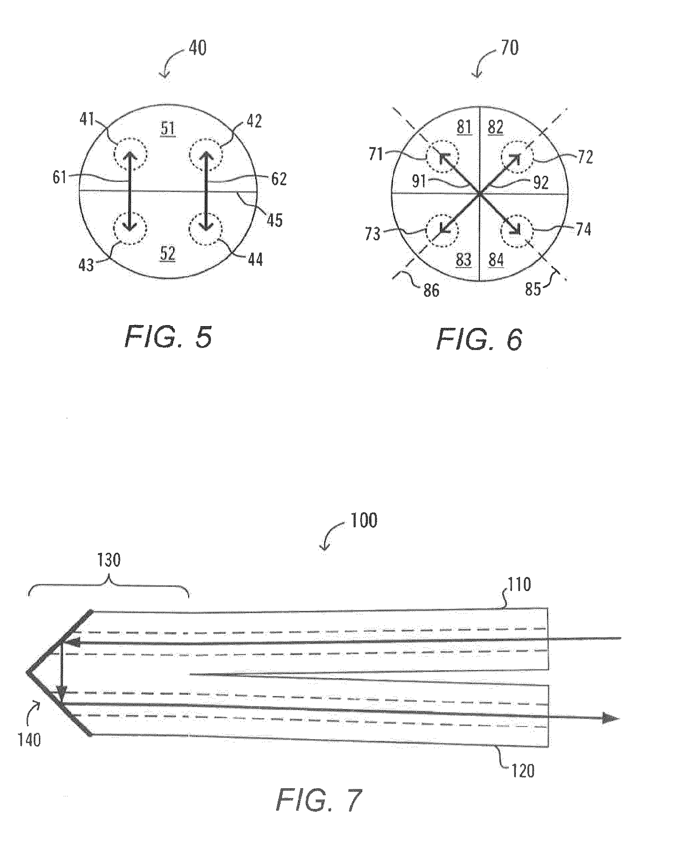

The described structures can be expanded to accommodate additional core pairs and additional respective bidirectional pathways. FIG. 5 shows a front view of an optical fiber turnaround 40 according to a further aspect of the invention, comprising four fiber cores 41-44 that are configured to provide two separate bidirectional pathways.

A first pathway is formed from a first core pair comprising cores 41 and 43. A second pathway is formed from a second core pair comprising cores 42 and 44. A reflector components is formed from a first reflective surface 51 at the distal ends of cores 41 and 43 and a second reflective surface 52 at the distal ends of cores 42 and 44.

Reflective surfaces 51 and 52 are angled to provide a first reflective pathway 61 between cores 41 and 43 and a second reflective pathway 62 between cores 42 and 44. Reflective surfaces 51 and 52 are angled at ±45° relative to the turnaround axis. Further, cores 41 and 43, cores 42 and 44, and reflective surfaces 51 and 52 are configured to have symmetrical positions around diameter 45.

FIG. 6 shows a four-core turnaround 70, in which cores 71-74 are paired diagonally to form a first pathway 91 comprising cores 71 and 74 and a second pathway 92 from cores 72 and 73. The reflector includes a first pair of angled reflective surfaces 81 and 84 for the first core pair 71 and 74, and a second pair of angled reflective surfaces 82 and 83 for the second core pair 72 and 73. Cores 71 and 74 and reflective surfaces 81 and 84 are symmetrical around diameter 85. Cores 72 and 73 and reflective surfaces 82 and 83 are symmetrical around diameter 86.

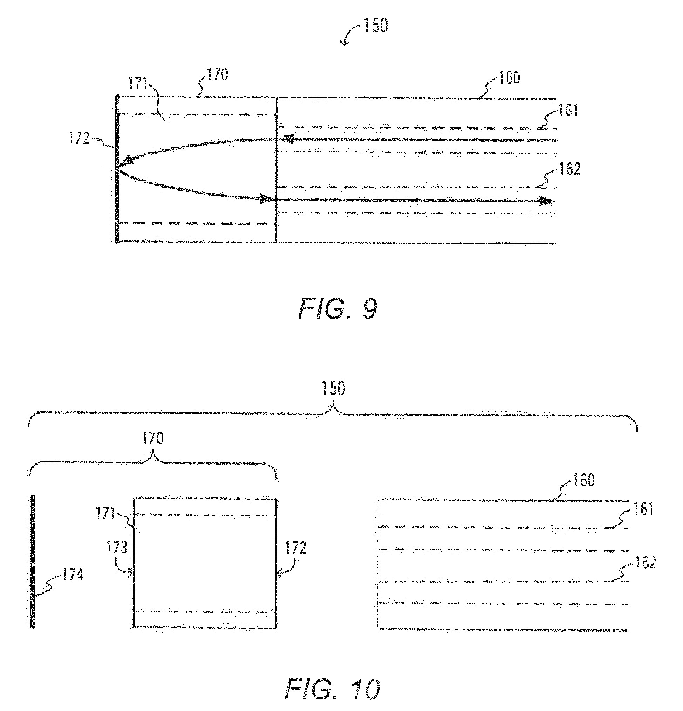

In addition, the four-core turnaround 70 shown in FIG. 6 can be implemented using a reflector comprising a segment of graduated-index (GRIN) fiber. Such a reflector is described below, with respect to FIGS. 9 and 10.

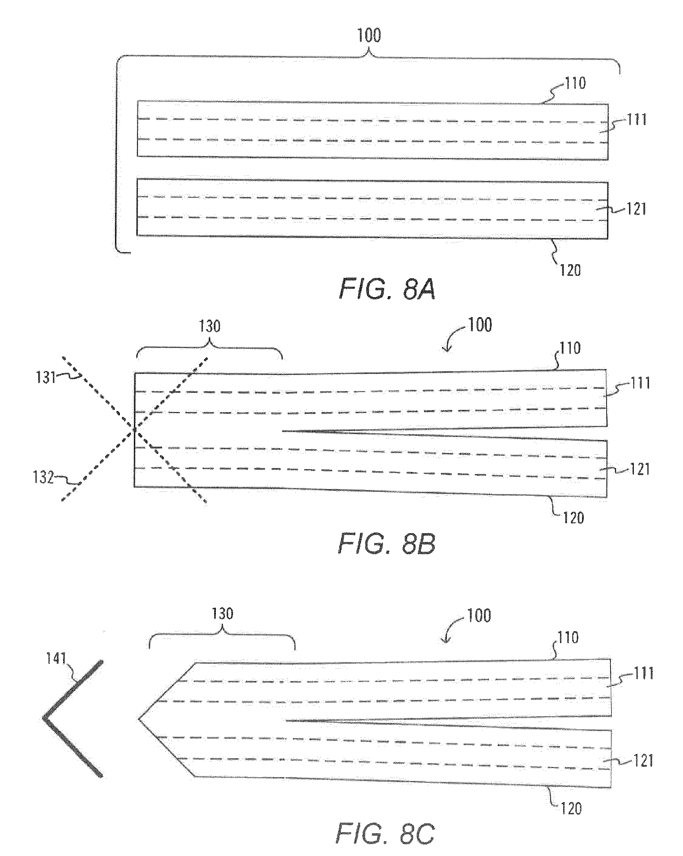

FIG. 7 shows a diagram of a turnaround device 100 according to a further practice of the invention, in which first and second optical fiber cores are provided by first and second single-core fibers 110 and 120. FIGS. 8A-8C are a series of diagrams illustrating the construction of turnaround device 100.

FIG. 8A shows a pair of single-core fibers 110 and 120, each having a respective core 111 and 121. In FIG. 8B, the distal ends of fibers 110 and 120 have been fused together to form a fused multicore body 130. After the multicore body 130 has been formed, a reflector 140 is then formed at the distal end of the multicore body 130 by grinding and polishing the fused multicore body 130 at broken lines 131 and 132. Then, as shown in FIG. 8C, a suitable reflective coating 141 is then applied to the shaped distal end of the fused multicore body 130.

The multi-fiber approach illustrated in FIGS. 8A-8C can be expanded to include two or more pairs of fibers, each fiber pair providing a separate respective bidirectional pathway, as shown for example in FIGS. 5 and 6, discussed above.

FIGS. 9 and 10 show, respectively, a side view and an exploded side view of a turnaround device 150 according to a further aspect of the invention, comprising an MCF segment 160 and a reflector element 170 that is implemented using a segment of a graded-index (GRIN) fiber 171 having a quadratic refractive index profile.

Generally speaking, light traveling down the length of a GRIN fiber segment of the type shown in FIGS. 9 and 10 travels along a sinusoidal pathway having a known period or "pitch." When light travels through the GRIN fiber for a distance equal to one-half of the pitch, or an odd multiple thereof, the traverse distribution of the light is inverted by 180°.

Thus, if a light is launched into the GRIN fiber segment 171 at a transverse location that is displaced from the GRIN fiber axis, and if the light travels a distance through the GRIN fiber segment 171 that is equal to the fiber's half-pitch, or odd multiple thereof, then the transverse location of the light is a mirror image of the original off-axis location, reflected through the axial center of the GRIN fiber segment 171.

In turnaround device 150, the GRIN fiber segment 171 has an outer diameter that is equal to the outer diameter of the MCF fiber segment. GRIN fiber segment 171 has a proximal endface 172 that is connected to the distal endface of the MCF fiber segment. GRIN fiber segment 171 further comprises a flat distal endface 173 that is perpendicular to the axis of transmission of the MCF fiber segment 160 and GRIN fiber segment 171. The GRIN fiber's distal endface 173 is coated with a suitably reflective material 174.

In turnaround device 150, the first and second cores 161 and 162 of the MCF segment 160 are configured to launch light into the GRIN fiber segment 171 at radially symmetric off-axis transverse locations. GRIN fiber segment 171 is configured to have a length equal to the GRIN fiber segment's quarter-pitch, or an odd multiple thereof.

Thus, when the input light enters the GRIN fiber segment 171 from the distal end of one of the first or second MCF cores 161 and 162, it travels to the reflective surface 174 and back for a distance equal to the GRIN fiber's half-pitch, or odd multiple thereof, causing the transverse position of the light to be inverted. The reflected light is focused back to its original size onto the distal end of the other of the first or second MCF cores. The overall result of the above-described configuration is to create a bidirectional pathway between the first and second MCF cores 161 and 162.

The fused reflector approach illustrated in FIGS. 9 and 10 and discussed above can be employed in conjunction with the multi-pathway and multi-fiber approaches discussed above.

While the foregoing description includes details which will enable those skilled in the art to practice the invention, it should be recognized that the description is illustrative in nature and that many modifications and variations thereof will be apparent to those skilled in the art having the benefit of these teachings. It is accordingly intended that the invention herein be defined solely by the claims appended hereto and that the claims be interpreted as broadly as permitted by the prior art.

## Claims

1. An optical fiber turnaround, comprising:
first and second optical fiber cores for transmitting light bidirectionally along a transmission axis between proximal and distal ends of the first and second optical fiber cores; and
a reflector component positioned at the distal ends of the first and second optical fiber cores,
wherein the first core, second core, and reflector component are configured to provide a bidirectional routing path, wherein light energy travels from the proximal end of one of the first and second cores towards the reflector component, and travels back from the reflector component along the other of the first and second cores.

2. The optical fiber turnaround of claim 1,
wherein the first and second optical fiber cores are respective cores of a multicore fiber segment.

3. The optical fiber turnaround of claim 1,
wherein the first and second optical fiber cores are respective cores of first and second optical fiber segments.

4. The optical fiber turnaround of claim 3,
wherein the distal ends of the first and second optical fiber segments are fused together to form a multicore body, and wherein the reflector is formed at the distal end of the multicore body.

5. The optical fiber turnaround of claim 1,
comprising a plurality of matched core pairs, each matched core pair comprising a respective first core and a respective second core,
wherein the plurality of matched core pairs and the reflector are configured to provide a plurality of bidirectional routing paths, each of which corresponds to a respective matched core pair.

6. The optical fiber turnaround of claim 1,
wherein the turnaround component comprises a first reflective surface at the distal end of the first core and a second reflective surface at the distal end of the second core,
wherein the first and second reflective surfaces are angled with respect to the first and second cores and with respect to each other so as to form a bidirectional pathway between the first and second cores.

7. The optical fiber turnaround of claim 6,
wherein the first and second reflective surfaces are angled, respectively, at plus and minus 45 degrees relative to the transmission axis of the optical fiber segment.

8. The optical fiber turnaround of claim 6,
wherein the first and second reflective surfaces comprise respective first and second angled facets at the distal end of the optical fiber segment having respective outer surfaces that are coated with a reflective material.

9. The optical fiber turnaround of claim 8,
wherein the first and second reflective angled facets comprise flat portions of a chiseled portion of the distal end of the fiber segment.

10. The optical fiber turnaround of claim 1,
wherein the turnaround reflector comprises a graded-index fiber segment connected to the distal end of the fiber segment,
wherein the graded-index fiber segment has a reflective endface, and
wherein the refractive index profile of the graded-index fiber and the position of the internally reflective endface are configured to cause light exiting one of the first and second waveguides to be guided and focused into the other of the first and second waveguides.

11. The optical fiber turnaround of claim 10,
wherein the graded-index fiber has a quadratic index distribution having a selected pitch, wherein the graded-index fiber has a length that is equal to an odd multiple of its quarter pitch,
wherein the endface of the graded-index fiber segment has a flat, reflective surface that is perpendicular to the transmission axis, and
wherein the distal ends of the first and second cores are aligned along the diameter of the graded-index fiber segment, and are positioned such that light exiting the distal end of either of the first and second cores is reflected by the reflective coating, such that it travels a total optical path having a length equal to an odd multiple of the half pitch of the graded-index fiber segment, and such that it is focused onto the distal end of the other of the first and second cores.
